# EUROPEAN PATENT SPECIFICATION

(11) **EP 4 431 679 B1**
(45) Date of publication and mention of the grant of the patent: **01.07.2026**
(21) Application number: 23382254.3
(22) Date of filing: 17.03.2023
(51) Int. Cl.: E04H 12/12, E04G 23/02, E04H 12/16, F03D 13/20

(54) **REINFORCEMENT SYSTEM FOR A TOWER OF A WIND TURBINE, TOWER OF A WIND TURBINE AND METHOD OF REINFORCING A TOWER OF A WIND TURBINE**
VERSTÄRKUNGSSYSTEM FÜR EINEN TURM EINER WINDTURBINE, TURM EINER WINDTURBINE UND VERFAHREN ZUR VERSTÄRKUNG EINES TURMS EINER WINDTURBINE
SYSTÈME DE RENFORCEMENT POUR UNE TOUR D'UNE ÉOLIENNE, TOUR D'UNE ÉOLIENNE ET PROCÉDÉ DE RENFORCEMENT D'UNE TOUR D'UNE ÉOLIENNE

(43) Date of publication of application: 18.09.2024
(73) Proprietor: Nordex Energy Spain, S.A.U., 31395 Barasoain (Navarra) (ES)
(72) Inventor: Garcia Maestre, Ivan, Navarra (ES); Arlabán Gabeiras, Teresa, Navarra (ES); Teruel Sicart, Arnau, Barcelona (ES); Serna García-Conde, José, Madrid (ES)
(74) Representative: Pons IP

(56) References cited:
- WO-A1-2010/084210
- WO-A1-2022/042808
- CN-A- 114 635 579
- CN-U- 218 375 656
- JP-A- 2016 014 312
- KR-B1- 100 943 211
- US-A1- 2009 165 404
- US-A1- 2009 307 998
- US-A1- 2016 097 179

## Description

### OBJECT OF THE INVENTION

The present invention relates to a reinforcement system for a tower of a wind turbine that increases the resistance of the concrete element wherein is intended to be disposed and additionally avoids the appearance or propagation of cracks or openings, if they are present, in the surface of a concrete element of the tower of the wind turbine once the tower is subjected to post-tensioning forces, exerting a radial compression force to the concrete element.

The invention also relates to a tower of a wind turbine comprising at least one reinforcement system.

Furthermore, the invention relates to a method of reinforcing a tower of a wind turbine.

### BACKGROUND OF THE INVENTION

The evolution of wind power generation technology is currently aimed at designing aerogenerators with increasingly larger power outputs, which implies an increase in the size of the constituent parts of the aerogenerators. The development of higher towers must be carried out taking into account a set of design criteria, such as load, resistance of the material and dynamic performance, in addition to construction, transport and installation conditions.

Towers up to 160 m in height can be manufactured following a full concrete manufacturing method or a hybrid concrete-steel manufacturing method.

In the manufacturing of hybrid concrete-steel towers, the tower comprises a lower tubular tower section made of concrete, an upper tubular tower section made of steel and an adapter for connecting the two tower sections, wherein the adapter can comprise a concrete element and a steel element, the steel element containing at least one flange that covers preferably entirely a surface of the concrete element, said surface being at the top in the installed state.

In the manufacturing of full concrete towers, the tower comprises at least one concrete tower section and an adapter disposed in the upper part of the first concrete tower section and below at least one wind turbine component, preferably the nacelle. The adapter may be in the same form as disclosed for a hybrid tower, connecting the at least one concrete tower section and the at least one wind turbine component.

In both of them, the full concrete tower and the concrete parts of hybrid towers made of steel and concrete are commonly provided with a post-tension system (e.g., cables, tendons, wires, strands...) in order to ensure that the concrete is under compression stresses during the most of the wind turbine lifetime. This however provokes the increase of load to which the concrete element is subjected.

Commonly, the post-tensioning elements (e.g., tendons) are uniformly distributed along the tower perimeter, so that the resultant post-tension force falls approximately in the central axis of the tower, avoiding in this way eccentric forces due to the post-tension system.

However, in many cases an eccentricity of the loads with respect to the axis of the tower wall (tendons) is produced, or simply due to concentrated loads involving radial forces (bolts) would lead to radial vertical cracks in the upper part of the concrete tower (or in the upper part of the concrete part in hybrid towers).

Radial forces give rise to circumferential stresses, which, depending on their magnitude, can cause vertical cracks, loss of stiffness of the structural element, variations of stress flows and fatigue damage.

CN218375656U discloses an arrangement for reinforcement of a single-pipe tower body.

JP2016014312A discloses a deformation control method for a reinforcing steel plate used on a reinforced concrete column that is implemented easily even in a narrow work space and capable of certainly preventing swelling of the reinforcing steel plate.

The reinforcement system and related method of the present solves all the above-mentioned drawbacks.

### DESCRIPTION OF THE INVENTION

The present invention relates to a reinforcement system for a tower of a wind turbine that increases the resistance of the concrete element wherein is intended to be externally disposed and additionally avoids the appearance or propagation, if they are present, of cracks or openings in the surface of a concrete element of the tower of the wind turbine once the tower is subjected to post-tensioning forces.

The reinforcement system is intended to be disposed on a tower of a wind turbine, wherein the tower comprises at least a first concrete element, and wherein the reinforcement system comprises:
at least one strengthening element which surrounds, in use, at least partially the first concrete element wherein the at least one strengthening element is configured to exert a radial compression force to at least a part of the first concrete element.

This increases the resistance of the concrete element wherein the reinforcement system is disposed, externally to the concrete element. Additionally, and in case the first concrete element presents cracks or openings disposed in the surface of at least a part of the first concrete element, the reinforcement system so defined strengthens said part avoiding the propagation of the crack or opening to the rest of the first concrete element, causing damage that can even lead to the collapse of the wind turbine.

In both cases, the circumferential stresses are confined and supported at least in part by means of the reinforcement system defined above, in such a way that the reinforcement system induces radial forces that compensate those coming from the tower.

The at least one strengthening element surrounds, in use, at least in a circumferential direction, at least partially the first concrete element. Preferably, the at least one strengthening element comprises at least an essentially cylindrical or frustoconical wall which surrounds, in use, at least partially the first concrete element. In this way, the cylindrical or frustoconical wall acts as a reinforcement sleeve following the external geometry of at least the first concrete element of the tower.

It has to be understood that the circumferential direction makes reference to a circumferential direction contained in a horizontal plane of the first concrete element at a height wherein the at least one strengthening surrounds the first concrete element, wherein the centre of the circumference defining the circumferential direction coincides with the centre of the tower.

Optionally, the cylindrical or frustoconical wall extends, in use, along a first length in a vertical direction of at least a part of the first concrete element.

The at least one strengthening element comprises at least two sectors surrounding, in use, at least in the circumferential direction, at least partially the first concrete element. Preferably, the at least one strengthening element comprises four sectors surrounding, in use, at least in the circumferential direction, the first concrete element.

The reinforcement system further comprises attaching means configured to attach the at least two sectors of the at least one strengthening element, wherein each one of the at least two sectors comprises first flanges wherein the attaching means are attached. Preferably, each one of the at least two sectors further comprises brackets configured to reinforce the attachment between the at least two sectors.

Optionally, the at least one strengthening element surrounds, in use, at least in a polygonal direction, at least partially the first concrete element. Preferably, the at least one strengthening element comprises at least an essentially vertical polygonal wall which surrounds, in use, in the polygonal direction and in a vertical direction, at least partially the first concrete element.

It has to be understood that the polygonal direction makes reference to a polygonal direction contained in a horizontal plane of the first concrete element at a height wherein the at least one strengthening surrounds the first concrete element, wherein the centre of the polygon defining the polygonal direction coincides with the centre of the tower.

Optionally, the reinforcement system further comprises a temporary or permanent element configured to withstand, in a temporary or permanent way, respectively, the at least one strengthening element. So, the temporary or permanent element provides a support for the at least one strengthening element at least until the at least one strengthening element exerts the radial compression force to at least a part of the first concrete element.

Optionally, the at least one strengthening element embraces, in use, at least partially the first concrete element.

Optionally, the reinforcement system further comprises a non-shrink material disposed in a first gap extending, in use, at least between the at least one strengthening element and the first concrete element. Preferably, the temporary or permanent element also provides a support for the non-shrink material until the non-shrink material has hardened. This is dependent on the geometry of the tower and the manufacturing and assembly tolerances of tower and the at least one strengthening element. Examples not being limitative of a non-shrink material are a layer of resin (thinner) or mortar (thicker) to necessary to ensure contact between the first concrete element and the at least one strengthening element.

Optionally, and as well as the circumferential or polygonal wall, the at least one strengthening element also comprises an essentially horizontal wall which surrounds, in use, emerging from the first concrete element, the first concrete element, in such a way that the non-shrink material is disposed in the first gap on the essentially horizontal wall.

Optionally, the reinforcement system further comprises fixation means configured to fix the at least one strengthening element to at least partially, the first concrete element. Preferably, the fixation means are configured to fix the at least one strengthening element to an external surface of the first concrete element.

The reinforcement system further comprises a tensioning system configured to exert a radial compression force to the at least one strengthening element. So, the radial compression force exerted by the tensioning system on the at least one strengthening element is transmitted from the strengthening element to the first concrete element. The tensioning system comprises:
- at least one tensioning element with two ends;
- at least an anchoring element configured to receive at least one of the two ends of said tensioning element; and
- at least one fixing element configured to fix the at least one of the two ends of the tensioning element to the at least one anchoring element.

The first flanges are configured to fix the position of the at least one tensioning element at a first height in a vertical direction of the at least one strengthening element. Preferably, each first flange comprises at least an opening through which the at least one tensioning element passes through.

Optionally, the reinforcement system comprises several strengthening elements disposed, in use, adjacent in a vertical direction surrounding the at least first concrete element.

Optionally, the at least one or the several strengthening elements surrounds at least the first concrete element in a length, preferably but not limited, of at least between 0.4m and 2m in the vertical direction.

The invention also relates to a tower according to appended claim 11 of a wind turbine comprising at least one reinforcement system as described above.

Optionally, the at least one strengthening element of the at least one reinforcement system covers at least a first tower surface in a region subjected to critical loading or damage. This region subjected to critical loading or damage is a region subjected to stresses concentration. The areas where the stresses, meaning the internal forces within the structure, are the largest, are the most susceptible to damage. Hence, such region subjected to stresses concentration might be, for example, a region including substantial changes in the cross-section dimensions of the structure and/or a substantial change in the properties of the material.

As an example, a region including substantial changes in the cross-section dimensions can be, for instance, a region including and/or being in the vicinity of holes, bolts, tensioning cables, sharp corners, and/or changes in the thickness of the concrete element walls.

As mentioned, this concentration of stresses can be caused for example by a substantial change in the wall thickness of the concrete element (for example substantial change in the wall thickness of the keystones occurring in the vicinity of the horizontal joints) which leads to a decrease in the cross-section, or by radial vertical cracks in the upper section of the concrete tower or in the upper section of the concrete part in hybrid towers, which lead to a change in the material properties occurring during the lifetime of the project.

Optionally, the first concrete element is a first concrete section of the tower. This may be the case of a full-concrete tower, wherein the tower comprises at least one concrete tower section and an adapter disposed in the upper part of the first concrete tower section and below at least one wind turbine component, preferably the nacelle. Preferably, the tower further comprises a second concrete section and a horizontal joint disposed between the first concrete section and the second concrete section, wherein the at least one strengthening element also surrounds, at least partially the horizontal joint and optionally at least partially the second concrete section. In this way, not only the first concrete element but also the horizontal joint and optionally the second concrete section are strengthened by the reinforcement system.

Optionally, the first concrete element is a concrete transition element being part of an adapter. This may be the case of a hybrid concrete-steel tower, wherein the tower comprises the adapter and at least a first steel section. Preferably, the tower further comprises a first concrete section and a horizontal joint disposed between the adapter and the first concrete section, wherein the at least one strengthening element also surrounds, at least partially the horizontal joint and optionally at least partially the first concrete section. The adapter is used as a transition element between the first concrete section with large diameter and the first steel section with smaller diameters. In this way, not only the first concrete element but also the horizontal joint and optionally the first concrete section are strengthened by the reinforcement system. In that case, the adapter serves as a transition between a concrete tower section with large diameters and a steel tower section with smaller diameters.

Optionally, the tower comprises at least two reinforcement systems as described above disposed adjacent or separated along a first length in a vertical direction of the at least a first concrete element.

Optionally, the tower comprises at least two reinforcement systems as described above being at least a first reinforcement system and at least a second reinforcement system, wherein the first reinforcement system is the reinforcement system surrounding at least partially the first concrete element and the second reinforcement system surrounds the second concrete section for the case of the full-concrete tower or the first concrete section for the case of the hybrid concrete-steel tower, respectively.

The invention also relates to a method according to appended claim 19 of reinforcing a tower of a wind turbine, the tower comprising at least a first concrete element;
wherein the method comprises:
- a step of placing at least one strengthening element surrounding, at least partially the first concrete element, in such a way that a radial compression force is exerted to at least a part of the first concrete element.

The step of placing at least one strengthening element surrounding, at least partially, the first concrete element, is carried out placing the at least one strengthening element surrounding, at least in a circumferential direction, at least partially the first concrete element. Preferably, the step of placing the at least one strengthening element further comprises a step of placing at least an essentially vertical circumferential wall surrounding, at least in the circumferential direction and in a vertical direction, at least partially the first concrete element.

Optionally, the step of placing at least one strengthening element surrounding, at least partially, the first concrete element, is carried out placing the at least one strengthening element surrounding, at least in a polygonal direction, at least partially the first concrete element. Preferably, the step of placing the at least one strengthening element further comprises a step of placing at least an essentially polygonal wall surrounding, at least in the polygonal direction and in a vertical direction, at least partially the first concrete element.

Optionally, the first concrete element is a first concrete section of the tower, and the step of placing at least one strengthening element surrounding, at least partially the first concrete element, is a step of placing the at least one strengthening element surrounding, at least in a circumferential direction, at least partially the first concrete section. Preferably, the tower further comprises a second concrete section and a horizontal joint disposed between the first concrete section and the second concrete section, and wherein the step of placing at least one strengthening element surrounding, at least partially the first concrete section further comprises a step of placing the at least one strengthening element also surrounding, at least partially the horizontal joint and optionally at least partially the second concrete section.

Optionally, the tower further comprises an adapter and at least a first steel section, wherein the first concrete element is a concrete transition element that is a part of the adapter, and wherein the step of placing at least one strengthening element surrounding, at least partially the first concrete element is a step of placing the at least one strengthening element surrounding, at least partially the concrete transition element of the adapter. Preferably, the tower further comprises a first concrete section and a horizontal joint disposed between the adapter and the first concrete section, and wherein the step of placing at least one strengthening element surrounding, at least partially the first concrete transition element further comprises a step of placing the at least one strengthening element also surrounding, at least partially the horizontal joint and optionally at least partially the first concrete section.

Optionally, the method further comprises a step of temporarily or permanently supporting the at least one strengthening element by means of a temporary or permanent element, respectively.

Optionally, the step of placing at least one strengthening element further comprises a step of leaving a first gap between the at least one strengthening element and the first concrete element. Preferably, the method further comprises a step of filling the first gap with a non-shrink material.

Optionally, and as well as the step of placing at least one strengthening element surrounding, at least partially, the first concrete element, placing the at least one strengthening element surrounding, at least in a circumferential or polygonal direction the first concrete element, the method also comprises placing the at least one strengthening element surrounding and emerging from the first concrete element in an essentially horizontal direction. In this way, the method also comprises a step of filing the at least one strengthening element with a non-shrink material.

Optionally, the step of leaving a first gap between the at least one strengthening element and the first concrete element, the first gap is also left at least partially between the at least one strengthening element and the horizontal joint and optionally between the at least one strengthening element and the second concrete section or the first concrete element, respectively.

Optionally, the method further comprises a step of fixing the at least one strengthening element to at least partially, the first concrete element.

The method further comprises a step of tensioning the at least one strengthening element exerting a radial compression force to the at least one strengthening element. In this way, the step of placing at least one strengthening element surrounding, at least partially the first concrete element, in such a way that a radial compression force is exerted to at least a part of the first concrete element comprises the step of tensioning the at least one strengthening element exerting a radial compression force to the at least one strengthening element.

The step of tensioning further comprises:
- a step of disposing at least one tensioning element with two ends surrounding at least a part of the at least one strengthening element;
- a step of anchoring at least one of the two ends of the at least one tensioning element; and
- a step of fixing the at least one of the two ends of the tensioning element to the at least one anchoring element.

Optionally, the method further comprises a step of reducing the post-tensioning loads of the tower with regard to rated loads before the step of placing at least one strengthening element.

Optionally, the method further comprises a step of restoring the post-tensioning loads of the tower to the rated loads after the step of placing at least one strengthening element.

### BRIEF DESCRIPTION OF THE DRAWINGS

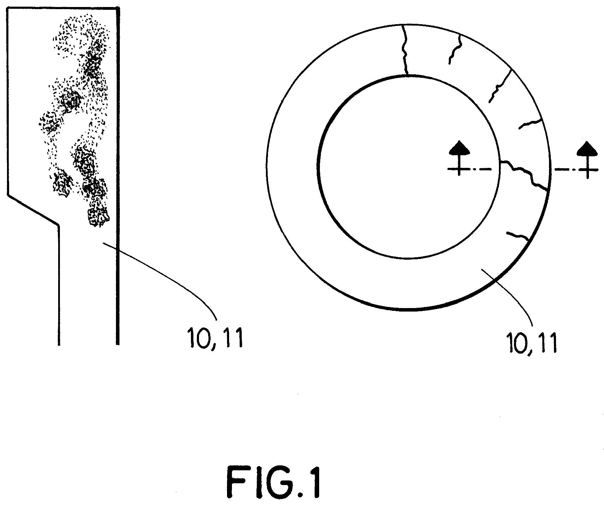

Figure 1 shows on the right side a top view of a first concrete element (first concrete section) showing the radial cracks that take place in a region of the first concrete element (first concrete section) subjected to critical loading or damage before the disposition of the at least one reinforcement system, and on the left side it is shown the upper area of the keystone, section CC, where the radial crack has extended along the keystone in the vertical direction.

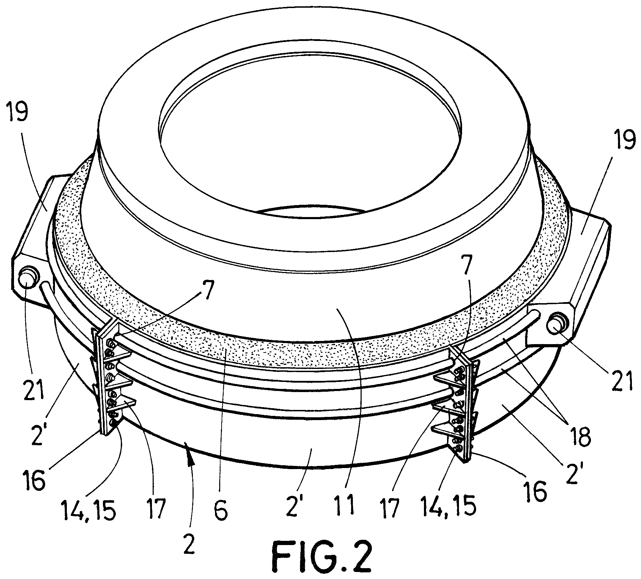

Figure 2 shows a perspective view of the reinforcement system of the present invention comprising at least one strengthening element which surrounds, at least partially the first concrete element, the first concrete element being an adapter.
Figure 3 shows a plan view of the reinforcement system of Figure 2.
Figure 4 shows a section AB of Figure 3 wherein the first gap is filled with the non-shrink material.
Figure 5 shows another embodiment of the reinforcement system of the present invention comprising four sectors.
Figure 6 shows another embodiment of the reinforcement system of the present invention.
Figure 7 shows another embodiment of the reinforcement system of the present invention.
Figure 8 shows another embodiment of the reinforcement system of the present invention.
Figure 9 shows a full concrete tower wherein the reinforcement system of the present invention is disposed surrounding at least partially the first concrete section, the horizontal joint between the first concrete section and the second concrete section and the second concrete section.
Figure 10 shows a hybrid concrete-steel tower wherein the reinforcement system of the present invention is disposed surrounding at least partially the adapter, the horizontal joint between the adapter and the first concrete section and the first concrete section.

### PREFERRED EMBODIMENT OF THE INVENTION

The invention is described in detail as follows. It relates to a reinforcement system for a tower (1) of a wind turbine, the tower (1) comprising at least a first concrete element (10, 11); and
wherein the reinforcement system comprises:
at least one strengthening element (2, 3) which surrounds, in use, at least partially the first concrete element (10, 11), wherein the at least one strengthening element (2, 3) is configured to exert a radial compression force to at least a part of the first concrete element (10, 11).

In the embodiments shown in the Figures, the at least one strengthening element (2, 3) surrounds, in use, at least in a circumferential direction, at least partially the first concrete element (10, 11) and comprises at least an essentially cylindrical or frustoconical wall (2), depending on the geometry of the first concrete element (10, 11), which surrounds, in use, at least partially the first concrete element (10, 11). Other variations in the form of the at least one strengthening element (2, 3) surrounding, in use, at least partially the first concrete element (10, 11) are included in this invention.

Optionally, the at least one strengthening element (2, 3) also comprises an essentially horizontal wall (3) which surrounds, in use, emerging from the first concrete element (10, 11), the first concrete element (10, 11), in such a way that a non-shrink material (6) is disposed in a first gap (5) defined between the first concrete element (10, 11), the essentially horizontal wall (3) and the cylindrical or frustoconical wall (2).

In other embodiments explained below, the non-shrink material (6) is disposed in the first gap (5) defined between the first concrete element (10, 11), a temporary or permanent element (13) and the cylindrical or frustoconical wall (2).

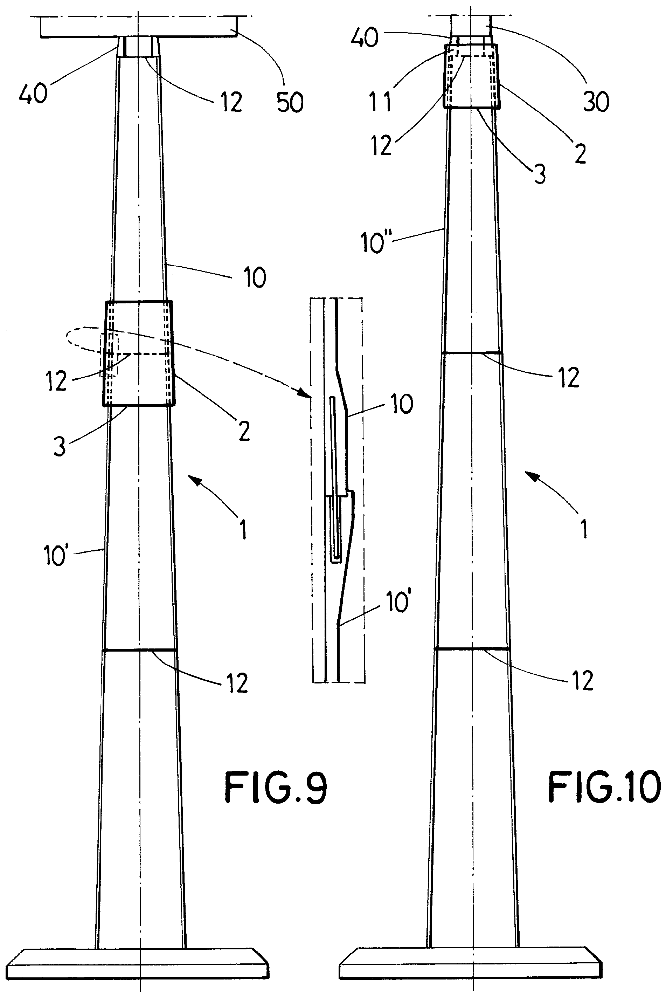

In a first preferred embodiment shown in Figure 9, the first concrete element (10, 11) is a first concrete section (10) of a tower (1) being a full-concrete tower, wherein the tower (1) comprises the first concrete section (10) and an adapter (40) disposed in the upper part of the first concrete section (10) and below at least one wind turbine component (50). The tower further comprises a second concrete section (10') and a horizontal joint (12) disposed between the first concrete section (10) and the second concrete section (10'), wherein the at least one strengthening element (2, 3) also surrounds, at least partially the horizontal joint (12) and optionally at least partially the second concrete section (10').

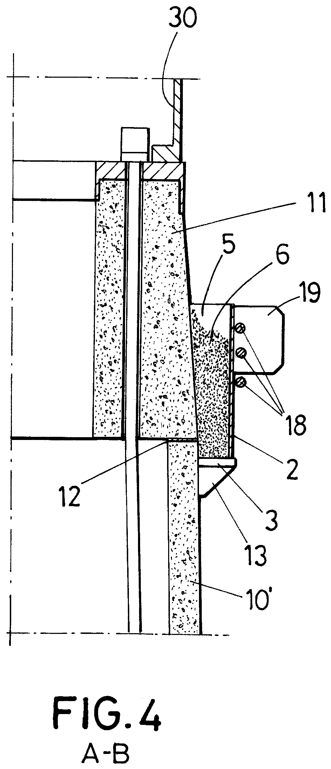

In a second preferred embodiment shown in Figure 10, the first concrete element (10, 11) is a concrete transition element (11), wherein the tower (1) is a hybrid concrete-steel tower comprising an adapter (40) and at least a first steel section (30), wherein the concrete transition element (11) is a part of the adapter (40). The tower further comprises a first concrete section (10") and a horizontal joint (12) disposed between the adapter (40) and the first concrete section (10"), wherein the at least one strengthening element (2, 3) also surrounds, at least partially the horizontal joint (12) and optionally at least partially the first concrete section (10"), as shown in Figure 4.

In the embodiments shown in the Figures, the reinforcement system further comprises a temporary or permanent element (13) configured to support, in a temporary way, the at least one strengthening element (2, 3).

As it can be seen in Figure 4, valid for both of the embodiments described above, the reinforcement system further comprises a non-shrink material (6) disposed in a first gap (5) extending at least between the at least one strengthening element (2, 3) and the first concrete element (10, 11). The non-shrink material (6) may also be disposed in the first gap extending at least partially between the at least one strengthening element (2, 3) and the horizontal joint (12) and between the at least one strengthening element (2, 3) and the second concrete section (10') for the full concrete tower embodiment or the first concrete section (10") for the hybrid concrete-steel tower.

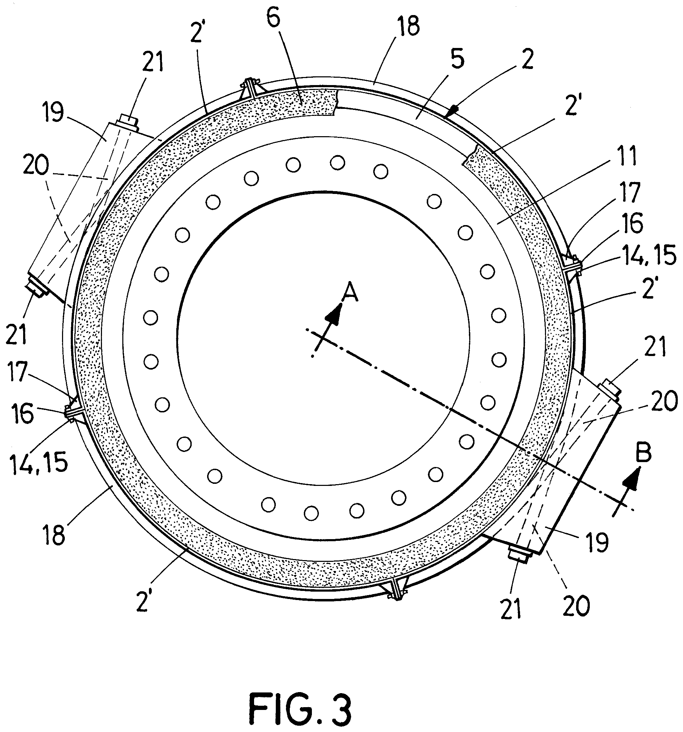

In both of the embodiments, the reinforcement system further comprises a tensioning system configured to exert a radial compression force to the at least one strengthening element (2, 3). As it is shown in Figure 3, the tensioning system may comprise:
- two tensioning elements (18), each one of them with two ends (20);
- two anchoring element (19), each one of them configured to receive the two ends (20) of one tensioning element; and
- one fixing element (21) configured to fix one end (20) of each of the ends (20) of each tensioning element (18) to one anchoring element (19).

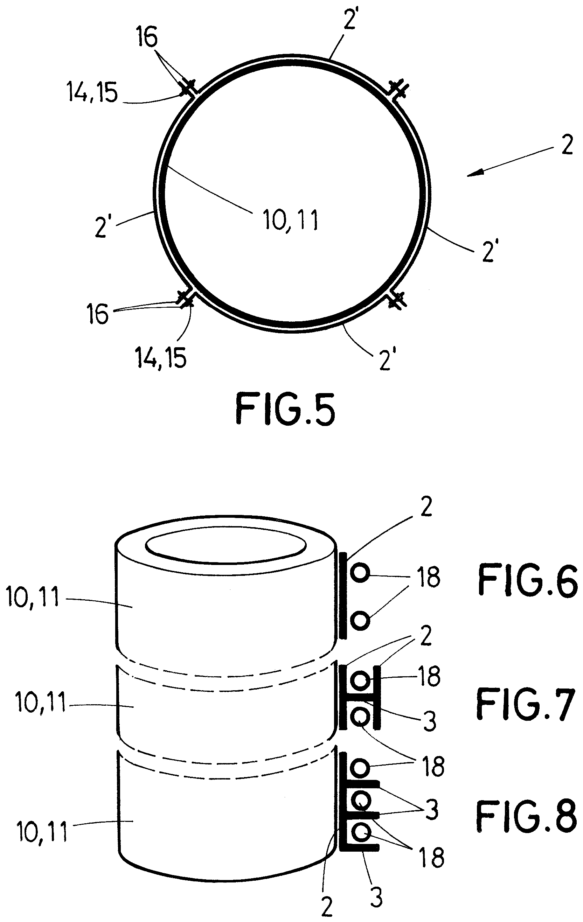

The at least one strengthening element (2, 3) may be metallic or made of carbon fibre. In any case, it must be made of a material that works well under traction. If the at least one strengthening element (2, 3) is metallic, for example a steel strengthening element, it comprises sectors (2') configured to be pre-assembled and joined at the first concrete element (1), as shown in Figure 5. If the reinforcement is made of carbon fibre, it could be laminated in-situ or with already laminated plates to be joined at the first concrete element (1).

In other embodiments of the reinforcement system shown in Figure 6 to 8, the at least one strengthening element (2, 3) comprises a curved H-profile or curved double T-profile (Figure 7), being the cylindrical or frustoconical wall (2) a part of the curved H-profile, in this case the wall, in use, more proximate to the first concrete element (10, 11), or multiple horizontal walls (3) emerging from the cylindrical or frustoconical wall (2), wherein the tensioning elements (18) of the tensioning system are disposed between the horizontal walls (3).

The invention also relates a method of reinforcing a tower (1) of a wind turbine of any of the embodiments described above, the tower (1) comprising at least a first concrete element (10, 11);
wherein the method comprises:
- a step of placing at least one strengthening element (2, 3) surrounding, at least partially the first concrete element (10, 11), in such a way that the at least one strengthening element exerts a radial compression force to at least a part of the first concrete element (10, 11).

In the embodiments shown in the Figures, the step of placing at least one strengthening element (2, 3) surrounding, at least partially, the first concrete element (10, 11), is carried out placing the at least one strengthening element (2, 3) surrounding, at least in a circumferential direction, at least partially the first concrete element (10, 11), more specifically placing at least an essentially vertical circumferential wall (2) surrounding, at least in the circumferential direction and in a vertical direction, at least partially the first concrete element (10, 11).

In the embodiments shown in the Figures, the method further comprises a step of temporarily supporting the at least one strengthening element (2, 3) by means of a temporary or permanent element (13).

In these embodiments, the step of placing at least one strengthening element (2, 3) further comprises a step of leaving a first gap (5) between the at least one strengthening element (2, 3) and the first concrete element (10, 11), not being limitative since the step of placing at least one strengthening element (2, 3) may comprises a step of fixing the at least one strengthening element (2, 3) to at least partially, the first concrete element (10, 11), by means of nuts and bolts, preferably, not leaving a first gap (5) between the at least one strengthening element (2, 3) and the first concrete element (10, 11).

In case the method comprises the step of placing at least one strengthening element (2, 3) leaving a first gap (5) between the at least one strengthening element (2, 3) and the first concrete element (10, 11), the method further comprises a step of filling the first gap (5) with a non-shrink material (6).

As explained above for the reinforcement system and in an equivalent way, in the step of leaving a first gap (5) between the at least one strengthening element (2, 3) and the first concrete element (10, 11), the first gap (5) is also left at least partially between the at least one strengthening element (2, 3) and the horizontal joint (12) and optionally between the at least one strengthening element (2, 3) and the second concrete section (10') or the first concrete element (10'), respectively, for both of the embodiments described above.

Preferably, the at least one strengthening element (2, 3) is disposed in the tower (1) in height, and auxiliary platforms hanging from the wind turbine component capable of rotating are used for the step of placing and that can rotate with it, since the at least one strengthening element (2, 3) preferably covers 360 degrees, i.e., the step of placing at least one strengthening element (2, 3) surrounding, at least partially the first concrete element (10, 11), in such a way that the at least one strengthening element exerts a radial compression force to at least a part of the first concrete element (10, 11) comprises two steps of placing a sector of the at least one strengthening element (2, 3) and a step of rotating the platforms between the two steps of placing a sector of the at least one strengthening element (2, 3).

In a preferred embodiment, the method comprises a step of tensioning the at least one strengthening element (2, 3) exerting a radial compression force to the at least one strengthening element (2, 3), wherein the step of tensioning further comprises:
- a step of disposing four tensioning elements (18), each one of them with two ends (20), surrounding at least a part of the at least one strengthening element (2, 3);
- a step of anchoring the two ends (20) of each tensioning element (18) by means of one anchoring element (19); and
- a step of fixing the two ends (20) of each tensioning element (18) to the respective anchoring elements (19) by means of one fixing element (21).

The method further comprises a step of reducing the post-tensioning loads of the tower (1) with regard to rated loads before the step of placing at least one strengthening element (2, 3) and a step of restoring the post-tensioning loads of the tower (1) to the rated loads after the step of placing at least one strengthening element (2, 3).

## Claims

1. Reinforcement system for a tower (1) of a wind turbine, the tower (1) comprising at least a first concrete element (10, 11); and
wherein the reinforcement system comprises:
at least one strengthening element (2, 3) which surrounds, in use, at least partially the first concrete element (10, 11), wherein the at least one strengthening element (2, 3) is configured to exert a radial compression force to at least a part of the first concrete element (10, 11);
wherein the at least one strengthening element (2, 3) surrounds, in use, at least in a circumferential direction, at least partially the first concrete element (10, 11);
wherein the at least one strengthening element (2, 3) comprises at least two sectors (2') surrounding, in use, at least in the circumferential direction, at least partially the first concrete element (10, 11);
further comprising attaching means (14, 15) configured to attach the at least two sectors (2') of the at least one strengthening element (2, 3), wherein each one of the at least two sectors (2') comprises first flanges (16) wherein the attaching means (14, 15) are attached;
**characterised in that** the reinforcement system further comprises a tensioning system configured to exert a radial compression force to the at least one strengthening element (2, 3);
wherein the tensioning system comprises:
- at least one tensioning element (18) with two ends (20);
- at least an anchoring element (19) configured to receive at least one of the two ends (20) of said tensioning element; and
- at least one fixing element (21) configured to fix the at least one of the two ends (20) of the tensioning element (18) to the at least one anchoring element (19);
wherein the first flanges (16) are configured to fix the position of the at least one tensioning element (18) at a first height in a vertical direction of the at least one strengthening element (2, 3).

2. Reinforcement system according to claim 1, wherein the at least one strengthening element (2, 3) comprises at least an essentially cylindrical or frustoconical wall (2) which surrounds, in use, at least partially the first concrete element (10, 11).

3. Reinforcement system according to claim 2, wherein the cylindrical or frustoconical wall (2) extends, in use, along a first length in a vertical direction of at least a part of the first concrete element (10, 11).

4. Reinforcement system according to claim 3, wherein each one of the at least two sectors (2') further comprises brackets (17) configured to reinforce the attachment between the at least two sectors (2').

5. Reinforcement system according to any one of the preceding claims, further comprising a temporary or permanent element (13) configured to withstand, in a temporary or permanent way, respectively, the at least one strengthening element (2, 3).

6. Reinforcement system according to any one of the preceding claims, wherein the at least one strengthening element (2, 3) embraces, in use, at least partially the first concrete element (10, 11).

7. Reinforcement system according to any one of the claims 1 to 5, further comprising a non-shrink material (6) disposed in a first gap (5) extending, in use, at least between the at least one strengthening element (2, 3) and the first concrete element (10, 11).

8. Reinforcement system according to any one of the claims 1 to 7, further comprising fixation means configured to fix the at least one strengthening element (2, 3) to at least partially, the first concrete element (10, 11).

9. Reinforcement system according to any one of the preceding claims comprising several strengthening elements (2, 3) disposed, in use, adjacent in a vertical direction surrounding the at least first concrete element (10, 11).

10. Reinforcement system according to any one of the preceding claims, wherein the at least one strengthening element (2, 3) surrounds, in use, at least the first concrete element (10, 11) in a length between 0.4m and 2m in a vertical direction.

11. Tower (1) of a wind turbine comprising at least a first concrete element (10, 11) and at least one reinforcement system according to any one of the preceding claims surrounding at least partially the first concrete element (10, 11).

12. Tower (1) of a wind turbine according to claim 11, wherein the at least one strengthening element (2, 3) of the at least one reinforcement system covers at least a first tower surface (4) in a region subjected to critical loading or damage.

13. Tower (1) of a wind turbine according to any one of claims 11 or 12, wherein the first concrete element (10) is a first concrete section (10) of the tower (1).

14. Tower (1) of a wind turbine according to claim 13, wherein the tower (1) further comprises a second concrete section (10') and a horizontal joint (12) disposed between the first concrete section (10) and the second concrete section (10'), wherein the at least one strengthening element (2, 3) also surrounds, at least partially the horizontal joint (12) and optionally at least partially the second concrete section (10').

15. Tower (1) of a wind turbine according to any one of claims 11 or 12, wherein the tower further comprises an adapter (40) and at least a first steel section (30), wherein the first concrete element (11) is a concrete transition element (11) that is a part of the adapter (40).

16. Tower (1) of a wind turbine according to claim 15, wherein the tower (1) further comprises a first concrete section (10") and a horizontal joint (12) disposed between the adapter (40) and the first concrete section (10"), wherein the at least one strengthening element (2, 3) also surrounds, at least partially the horizontal joint (12) and optionally at least partially the first concrete section (10").

17. Tower (1) of a wind turbine according to any one of claims 11 to 16, comprising at least two reinforcement systems according to any one of claims 1 to 16 disposed adjacent or separated along a first length in a vertical direction of the at least a first concrete element (10, 11).

18. Tower (1) of a wind turbine according to any one of claims 14 or 16, comprising at least two reinforcement systems according to any one of claims 1 to 16 being at least a first reinforcement system and at least a second reinforcement system, wherein the first reinforcement system is the reinforcement system surrounding at least partially the first concrete element (10, 11) and the second reinforcement system surrounds the second concrete section (10') or the first concrete section (10"), respectively.

19. Method of reinforcing a tower (1) of a wind turbine, the tower (1) comprising at least a first concrete element (10, 11);
wherein the method comprises:
- a step of placing at least one strengthening element (2, 3) surrounding, at least partially the first concrete element (10, 11), in such a way that the at least one strengthening element exerts a radial compression force to at least a part of the first concrete element (10, 11);
wherein the step of placing at least one strengthening element (2, 3) surrounding, at least partially, the first concrete element (10, 11), is carried out placing the at least one strengthening element (2, 3) surrounding, at least in a circumferential direction, at least partially the first concrete element (10, 11) wherein at least an essentially cylindrical or frustoconical wall (2) is placed surrounding, at least partially the first concrete element (10, 11), extending the at least an essentially cylindrical or frustoconical wall (2) along a first length in a vertical direction of at least a part of the first concrete element (10, 11), wherein the at least an essentially cylindrical or frustoconical wall (2) comprises at least two sectors (2') that are attached embracing, at least in the circumferential direction, at least partially the first concrete element (10, 11), whereby each one of the at least two sectors (2') comprises first flanges (16) wherein attaching means (14,15) are attached, said attaching means (14,15) configured to attach the at least two sectors (2'), the method further comprising a step of tensioning the at least one strengthening element (2, 3) exerting a radial compression force to the at least one strengthening element (2, 3), wherein the step of tensioning further comprises:
- a step of disposing at least one tensioning element (18) with two ends (20) surrounding at least a part of the at least one strengthening element;
- a step of anchoring at least one of the two ends (20) of the at least one tensioning element (18); and
- a step of fixing the at least one of the two ends (20) of the tensioning element (18) to the at least one anchoring element (19);
wherein the method further comprises:
- a step of fixing by way of the configuration of the first flanges (16) the position of the at least one tensioning element (18) at a first height in a vertical direction of the at least one strengthening element (2, 3).

20. The method according to claim 19, wherein the step of placing at least one strengthening element (2, 3) further comprises a step of leaving a first gap (5) between the at least one strengthening element (2, 3) and the first concrete element (10, 11) and a step of filling the first gap (5) with a non-shrink material (6).

21. The method according to any one of claims 19 to 20, further comprising a step of reducing the post-tensioning loads of the tower (1) with regard to rated loads before the step of placing at least one strengthening element (2, 3).

22. The method according to claim 21, further comprising a step of restoring the post-tensioning loads of the tower (1) to the rated loads after the step of placing at least one strengthening element (2, 3).

23. The method according to any one of claims 19 to 22, further comprising a step of sealing at least a crack of the first concrete element (10, 11) before the step of placing at least one strengthening element (2, 3).

## Patentansprüche

1. Verstärkungssystem für einen Turm (1) einer Windturbine, wobei der Turm (1) mindestens ein erstes Betonelement (10, 11) umfasst; und
wobei das Verstärkungssystem Folgendes umfasst:
mindestens ein Verfestigungselement (2, 3), das bei Verwendung mindestens teilweise das erste Betonelement (10, 11) umgibt, wobei das mindestens eine Verfestigungselement (2, 3) dazu konfiguriert ist, eine radiale Druckkraft auf mindestens einen Teil des ersten Betonelements (10, 11) auszuüben;
wobei das mindestens eine Verfestigungselement (2, 3) bei Verwendung mindestens in Umfangsrichtung das erste Betonelement (10, 11) mindestens teilweise umgibt; wobei das mindestens eine Verfestigungselement (2, 3) mindestens zwei Sektoren (2') umfasst, die bei Verwendung mindestens in Umfangsrichtung das erste Betonelement (10, 11) mindestens teilweise umgeben;
ferner umfassend Befestigungsmittel (14, 15), die dazu konfiguriert sind, die mindestens zwei Sektoren (2') des mindestens einen Verfestigungselements (2, 3) zu befestigen, wobei jeder der mindestens zwei Sektoren (2') erste Flansche (16) umfasst, an denen die Befestigungsmittel (14, 15) befestigt sind;
**dadurch gekennzeichnet, dass** das Verstärkungssystem ferner ein Spannsystem umfasst, das dazu konfiguriert ist, eine radiale Druckkraft auf das mindestens eine Verfestigungselement (2, 3) auszuüben;
wobei das Spannsystem Folgendes umfasst:
- mindestens ein Spannelement (18) mit zwei Enden (20);
- mindestens ein Verankerungselement (19), das dazu konfiguriert ist, mindestens eines der beiden Enden (20) des Spannelements aufzunehmen; und
- mindestens ein Fixierungselement (21), das dazu konfiguriert ist, das mindestens eine der beiden Enden (20) des Spannelements (18) an dem mindestens einen Verankerungselement (19) zu fixieren; wobei die ersten Flansche (16) dazu konfiguriert sind, die Position des mindestens einen Spannelements (18) in einer ersten Höhe in vertikaler Richtung des mindestens einen Verfestigungselements (2, 3) zu fixieren.

2. Verstärkungssystem nach Anspruch 1, wobei das mindestens eine Verfestigungselement (2, 3) mindestens eine im Wesentlichen zylindrische oder kegelstumpfförmige Wand (2) umfasst, die bei Verwendung das erste Betonelement (10, 11) mindestens teilweise umgibt.

3. Verstärkungssystem nach Anspruch 2, wobei sich die zylindrische oder kegelstumpfförmige Wand (2) bei Verwendung entlang einer ersten Länge in vertikaler Richtung mindestens eines Teils des ersten Betonelements (10, 11) erstreckt.

4. Verstärkungssystem nach Anspruch 3, wobei jeder der mindestens zwei Sektoren (2') ferner Halterungen (17) umfasst, die dazu konfiguriert sind, die Befestigung zwischen den mindestens zwei Sektoren (2') zu verstärken.

5. Verstärkungssystem nach einem der vorhergehenden Ansprüche, ferner umfassend ein temporäres oder permanentes Element (13), das dazu konfiguriert ist, jeweils temporär oder permanent das mindestens eine Verfestigungselement (2, 3) zu tragen.

6. Verstärkungssystem nach einem der vorhergehenden Ansprüche, wobei das mindestens eine Verfestigungselement (2, 3) bei Verwendung mindestens teilweise das erste Betonelement (10, 11) umschließt.

7. Verstärkungssystem nach einem der Ansprüche 1 bis 5, ferner umfassend ein nicht schrumpfendes Material (6), das in einem ersten Spalt (5) angeordnet ist, der sich bei Verwendung mindestens zwischen dem mindestens einen Verfestigungselement (2, 3) und dem ersten Betonelement (10, 11) erstreckt.

8. Verstärkungssystem nach einem der Ansprüche 1 bis 7, ferner umfassend Fixierungsmittel, die dazu konfiguriert sind, das mindestens eine Verfestigungselement (2, 3) mindestens teilweise an dem ersten Betonelement (10, 11) zu fixieren.

9. Verstärkungssystem nach einem der vorhergehenden Ansprüche, umfassend mehrere Verfestigungselemente (2, 3), die bei Verwendung in vertikaler Richtung benachbart angeordnet sind und das mindestens erste Betonelement (10, 11) umgeben.

10. Verstärkungssystem nach einem der vorhergehenden Ansprüche, wobei das mindestens eine Verfestigungselement (2, 3) im Gebrauch mindestens das erste Betonelement (10, 11) auf einer Länge zwischen 0,4 m und 2 m in vertikaler Richtung umgibt.

11. Turm (1) einer Windturbine, umfassend mindestens ein erstes Betonelement (10, 11) und mindestens ein Verstärkungssystem nach einem der vorhergehenden Ansprüche, das das erste Betonelement (10, 11) mindestens teilweise umgibt.

12. Turm (1) einer Windturbine nach Anspruch 11, wobei das mindestens eine Verfestigungselement (2, 3) des mindestens einen Verstärkungssystems mindestens eine erste Turmfläche (4) in einem Bereich abdeckt, der einer kritischen Belastung oder Beschädigung ausgesetzt ist.

13. Turm (1) einer Windturbine nach einem der Ansprüche 11 oder 12, wobei das erste Betonelement (10) ein erster Betonabschnitt (10) des Turms (1) ist.

14. Turm (1) einer Windturbine nach Anspruch 13, wobei der Turm (1) ferner einen zweiten Betonabschnitt (10') und eine horizontale Fuge (12) umfasst, die zwischen dem ersten Betonabschnitt (10) und dem zweiten Betonabschnitt (10') angeordnet ist, wobei das mindestens eine Verfestigungselement (2, 3) zudem mindestens teilweise die horizontale Fuge (12) und gegebenenfalls mindestens teilweise den zweiten Betonabschnitt (10') umgibt.

15. Turm (1) einer Windturbine nach einem der Ansprüche 11 oder 12, wobei der Turm ferner einen Adapter (40) und mindestens einen ersten Stahlabschnitt (30) umfasst, wobei das erste Betonelement (11) ein Betonübergangselement (11) ist, das Teil des Adapters (40) ist.

16. Turm (1) einer Windturbine nach Anspruch 15, wobei der Turm (1) ferner einen ersten Betonabschnitt (10") und eine horizontale Fuge (12) umfasst, die zwischen dem Adapter (40) und dem ersten Betonabschnitt (10") angeordnet ist, wobei das mindestens eine Verfestigungselement (2, 3) zudem mindestens teilweise die horizontale Fuge (12) und gegebenenfalls mindestens teilweise den ersten Betonabschnitt (10") umgibt.

17. Turm (1) einer Windturbine nach einem der Ansprüche 11 bis 16, umfassend mindestens zwei Verstärkungssysteme nach einem der Ansprüche 1 bis 16, die entlang einer ersten Länge in vertikaler Richtung des mindestens einen ersten Betonelements (10, 11) benachbart oder voneinander getrennt angeordnet sind.

18. Turm (1) einer Windturbine nach einem der Ansprüche 14 oder 16, umfassend mindestens zwei Verstärkungssysteme nach einem der Ansprüche 1 bis 16, die mindestens ein erstes Verstärkungssystem und mindestens ein zweites Verstärkungssystem sind, wobei das erste Verstärkungssystem das Verstärkungssystem ist, das das erste Betonelement (10, 11) mindestens teilweise umgibt und das zweite Verstärkungssystem jeweils den zweiten Betonabschnitt (10') oder den ersten Betonabschnitt (10") umgibt.

19. Verfahren zum Verstärken eines Turms (1) einer Windturbine, wobei der Turm (1) mindestens ein erstes Betonelement (10, 11) umfasst;
wobei das Verfahren Folgendes umfasst:
- einen Schritt zum Platzieren von mindestens einem Verfestigungselement (2, 3), das das erste Betonelement (10, 11) mindestens teilweise umgibt, derart, dass das mindestens eine Verfestigungselement eine radiale Druckkraft auf mindestens einen Teil des ersten Betonelements (10, 11) ausübt;
wobei der Schritt des Platzierens mindestens eines Verfestigungselements (2, 3), das das erste Betonelement (10, 11) mindestens teilweise umgibt, dadurch durchgeführt wird, dass das mindestens eine Verfestigungselement (2, 3), das das erste Betonelement (10, 11) mindestens in Umfangsrichtung mindestens teilweise umgibt, platziert wird, wobei mindestens eine im Wesentlichen zylindrische oder kegelstumpfförmige Wand (2) so platziert wird, dass sie das erste Betonelement (10, 11) mindestens teilweise umgibt, wobei sich die mindestens eine im Wesentlichen zylindrische oder kegelstumpfförmige Wand (2) entlang einer ersten Länge in vertikaler Richtung über mindestens einen Teil des ersten Betonelements (10, 11) erstreckt, wobei die mindestens eine im Wesentlichen zylindrische oder kegelstumpfförmige Wand (2) mindestens zwei Sektoren (2') umfasst, die so befestigt sind, dass sie mindestens in Umfangsrichtung das erste Betonelement (10, 11) mindestens teilweise umschließen, wodurch jeder der mindestens zwei Sektoren (2') erste Flansche (16) umfasst, an denen Befestigungsmittel (14, 15) befestigt sind, wobei die Befestigungsmittel (14, 15) dazu konfiguriert sind, die mindestens zwei Sektoren (2') zu befestigen, wobei das Verfahren ferner einen Schritt des Spannens des mindestens einen Verfestigungselements (2, 3) unter Ausübung einer radialen Druckkraft auf das mindestens eine Verfestigungselement (2, 3) umfasst, wobei der Schritt des Spannens ferner Folgendes umfasst:
- einen Schritt zum Anordnen mindestens eines Spannelements (18) mit zwei Enden (20), die mindestens einen Teil des mindestens einen Verfestigungselements umgeben;
- einen Schritt zum Verankern mindestens eines der beiden Enden (20) des mindestens einen Spannelements (18); und
- einen Schritt zum Fixieren mindestens eines der beiden Enden (20) des Spannelements (18) an mindestens einem Verankerungselement (19):
wobei das Verfahren ferner Folgendes umfasst:
- einen Schritt zum Fixieren der Position des mindestens einen Spannelements (18) in einer ersten Höhe in vertikaler Richtung des mindestens einen Verfestigungselements (2, 3) mittels der Konfiguration der ersten Flansche (16).

20. Verfahren nach Anspruch 19, wobei der Schritt zum Platzieren von mindestens einem Verfestigungselement (2, 3) ferner einen Schritt zum Belassen eines ersten Spalts (5) zwischen dem mindestens einen Verfestigungselement (2, 3) und dem ersten Betonelement (10, 11) sowie einen Schritt zum Füllen des ersten Spalts (5) mit einem schrumpffreien Material (6) umfasst.

21. Verfahren nach einem der Ansprüche 19 bis 20, ferner umfassend einen Schritt zum Verringern der Nachspannlasten des Turms (1) im Hinblick auf die Nennlasten vor dem Schritt zum Platzieren von mindestens einem Verfestigungselement (2, 3).

22. Verfahren nach Anspruch 21, ferner umfassend einen Schritt zum Wiederherstellen der Nachspannlasten des Turms (1) auf die Nennlasten nach dem Schritt zum Platzieren von mindestens einem Verfestigungselement (2, 3).

23. Verfahren nach einem der Ansprüche 19 bis 22, ferner umfassend einen Schritt zum Abdichten mindestens eines Risses des ersten Betonelements (10, 11) vor dem Schritt zum Platzieren mindestens eines Verfestigungselements (2, 3).

## Revendications

1. Système de renforcement pour une tour (1) d'une éolienne, la tour (1) comprenant au moins un premier élément en béton (10, 11) ; et
dans lequel le système de renforcement comprend :
au moins un élément de consolidation (2, 3) qui entoure, en utilisation, au moins partiellement le premier élément en béton (10, 11), dans lequel l'au moins un élément de consolidation (2, 3) est conçu pour exercer une force de compression radiale sur au moins une partie du premier élément en béton (10, 11) ;
dans lequel l'au moins un élément de consolidation (2, 3) entoure, en utilisation, au moins dans un sens circonférentiel, au moins partiellement le premier élément en béton (10, 11) ; dans lequel l'au moins un élément de consolidation (2, 3) comprend au moins deux secteurs (2') entourant, en utilisation, au moins dans le sens circonférentiel, au moins partiellement le premier élément en béton (10, 11) ;
comprenant en outre des moyens de liaison (14, 15) conçus pour relier les au moins deux secteurs (2') de l'au moins un élément de consolidation (2, 3), dans lequel chacun des au moins deux secteurs (2') comprend des premières brides (16) dans lesquelles les moyens de liaison (14, 15) sont reliés ;
**caractérisé en ce que** le système de renforcement comprend en outre un système de mise en tension conçu pour exercer une force de compression radiale sur l'au moins un élément de consolidation (2, 3) ;
dans lequel le système de mise en tension comprend :
- au moins un élément de mise en tension (18) avec deux extrémités (20) ;
- au moins un élément d'ancrage (19) conçu pour recevoir au moins l'une des deux extrémités (20) dudit élément de mise en tension ; et
- au moins un élément de fixation (21) conçu pour fixer l'au moins une des deux extrémités (20) de l'élément de mise en tension (18) à l'au moins un élément d'ancrage (19) ; dans lequel les premières brides (16) sont conçues pour fixer la position de l'au moins un élément de mise en tension (18) à une première hauteur dans un sens vertical de l'au moins un élément de consolidation (2, 3).

2. Système de renforcement selon la revendication 1, dans lequel l'au moins un élément de consolidation (2, 3) comprend au moins une paroi (2) essentiellement cylindrique ou tronconique qui entoure, en utilisation, au moins en partie le premier élément en béton (10, 11).

3. Système de renforcement selon la revendication 2, dans lequel la paroi cylindrique ou tronconique (2) s'étend, en utilisation, sur une première longueur dans un sens vertical d'au moins une partie du premier élément en béton (10, 11).

4. Système de renforcement selon la revendication 3, dans lequel chacun des au moins deux secteurs (2') comprend en outre des supports (17) conçus pour renforcer la liaison entre lesdits au moins deux secteurs (2').

5. Système de renforcement selon l'une quelconque des revendications précédentes, comprenant en outre un élément temporaire ou permanent (13) conçu pour résister à, de manière temporaire ou permanente, respectivement, l'au moins un élément de consolidation (2, 3).

6. Système de renforcement selon l'une quelconque des revendications précédentes, dans lequel l'au moins un élément de consolidation (2, 3) enserre, en utilisation, au moins en partie le premier élément en béton (10, 11).

7. Système de renforcement selon l'une quelconque des revendications 1 à 5, comprenant en outre un matériau non rétractable (6) disposé dans un premier espace (5) s'étendant, en utilisation, au moins entre l'au moins un élément de renforcement (2, 3) et le premier élément en béton (10, 11).

8. Système de renforcement selon l'une quelconque des revendications 1 à 7, comprenant en outre des moyens de fixation conçus pour fixer l'au moins un élément de consolidation (2, 3) au moins partiellement, au premier élément en béton (10, 11).

9. Système de renforcement selon l'une quelconque des revendications précédentes, comprenant plusieurs éléments de consolidation (2, 3) disposés, en utilisation, adjacents dans un sens vertical entourant l'au moins premier élément en béton (10, 11).

10. Système de renforcement selon l'une quelconque des revendications précédentes, dans lequel l'au moins un élément de consolidation (2, 3) entoure, en utilisation, au moins le premier élément en béton (10, 11) sur une longueur entre 0,4 m et 2 m dans un sens vertical.

11. Tour (1) d'une éolienne comprenant au moins un premier élément en béton (10, 11) et au moins un système de renforcement selon l'une quelconque des revendications précédentes entourant au moins partiellement le premier élément en béton (10, 11).

12. Tour (1) d'une éolienne selon la revendication 11, dans laquelle l'au moins un élément de consolidation (2, 3) de l'au moins un système de renforcement recouvre au moins une première surface de tour (4) dans une zone soumise à un chargement critique ou à un endommagement.

13. Tour (1) d'une éolienne selon l'une quelconque des revendications 11 ou 12, dans laquelle le premier élément en béton (10) est une première section en béton (10) de la tour (1).

14. Tour (1) d'une éolienne selon la revendication 13, dans laquelle la tour (1) comprend en outre une seconde section en béton (10') et un joint horizontal (12) disposé entre la première section en béton (10) et la seconde section en béton (10'), dans laquelle l'au moins un élément de consolidation (2, 3) entoure également, au moins partiellement le joint horizontal (12) et éventuellement au moins partiellement la seconde section en béton (10').

15. Tour (1) d'une éolienne selon l'une quelconque des revendications 11 ou 12, dans laquelle la tour comprend en outre un adaptateur (40) et au moins une première section en acier (30), dans laquelle le premier élément en béton (11) est un élément de transition en béton (11) qui fait partie de l'adaptateur (40).

16. Tour (1) d'une éolienne selon la revendication 15, dans laquelle la tour (1) comprend en outre un premier élément en béton (10") et un joint horizontal (12) disposé entre l'adaptateur (40) et la première section en béton (10"), dans laquelle l'au moins un élément de consolidation (2, 3) entoure également, au moins partiellement le joint horizontal (12) et éventuellement au moins partiellement la première section en béton (10').

17. Tour (1) d'une éolienne selon l'une quelconque des revendications 11 à 16, comprenant au moins deux systèmes de renforcement selon l'une quelconque des revendications 1 à 16 disposés adjacents ou séparés sur une première longueur dans un sens vertical d'au moins un premier élément en béton (10, 11).

18. Tour (1) d'une éolienne selon l'une quelconque des revendications 14 ou 16, comprenant au moins deux systèmes de renforcement selon l'une quelconque des revendications 1 à 16 à savoir au moins un premier système de renforcement et au moins un second système de renforcement, dans laquelle le premier système de renforcement est le système de renforcement entourant au moins partiellement le premier élément en béton (10, 11) et le second système de renforcement entoure la seconde section en béton (10') ou la première section en béton (10"), respectivement.

19. Procédé de renforcement d'une tour (1) d'une éolienne, la tour (1) comprenant au moins un premier élément en béton (10, 11) ;
dans lequel le procédé comprend :
- une étape consistant à placer au moins un élément de consolidation (2, 3) entourant, au moins partiellement le premier élément en béton (10, 11), de telle manière que ledit au moins un élément de consolidation exerce une force de compression radiale sur au moins une partie du premier élément en béton (10, 11) ;
dans lequel l'étape consistant à placer au moins un élément de consolidation (2, 3) entourant, au moins partiellement, le premier élément en béton (10, 11), s'effectue en plaçant l'au moins un élément de consolidation (2, 3) entourant, au moins dans un sens circonférentiel, au moins partiellement le premier élément en béton (10, 11) dans lequel au moins une paroi (2) essentiellement cylindrique ou tronconique est placée entourant, au moins partiellement le premier élément en béton (10, 11), en prolongeant l'au moins une paroi (2) essentiellement cylindrique ou tronconique, sur une première longueur dans un sens vertical d'au moins une partie du premier élément en béton (10, 11), dans lequel l'au moins une paroi (2) essentiellement cylindrique ou tronconique comprend au moins deux secteurs (2') qui sont reliés en enserrant, au moins dans le sens circonférentiel, au moins partiellement le premier élément en béton (10, 11), moyennant quoi chacun des au moins deux secteurs (2') comprend des premières brides (16) dans lesquelles des moyens de liaison (14, 15) sont reliés, lesdits moyens de liaison (14, 15) conçus pour relier les au moins deux secteurs (2'), le procédé comprenant en outre une étape consistant à mettre en tension l'au moins un élément de consolidation (2, 3) en exerçant une force de compression radiale sur l'au moins un élément de consolidation (2, 3), dans lequel l'étape consistant à mettre en tension comprend en outre :
- une étape consistant à disposer au moins un élément de mise en tension (18) avec les deux extrémités (20) entourant au moins une partie de l'au moins un élément de consolidation ;
- une étape consistant à ancrer au moins l'une des deux extrémités (20) dudit au moins un élément de mise en tension (18) ; et
- une étape consistant à fixer l'au moins une des deux extrémités (20) de l'élément de mise en tension (18) à au moins un élément d'ancrage (19) :
dans lequel le procédé comprend en outre :
- une étape consistant à fixer par le biais de la configuration des premières brides (16) la position de l'au moins un élément de mise en tension (18) à une première hauteur dans un sens vertical de l'au moins un élément de consolidation (2, 3).

20. Procédé selon la revendication 19, dans lequel l'étape consistant à placer au moins un élément de consolidation (2, 3) comprend en outre une étape consistant à laisser un premier espace (5) entre l'au moins un élément de consolidation (2, 3) et le premier élément en béton (10, 11), et une étape consistant à remplir ledit premier espace (5) avec un matériau sans retrait (6).

21. Procédé selon l'une quelconque des revendications 19 à 20, comprenant en outre une étape consistant à réduire les charges de mise en tension ultérieure de la tour (1) par rapport aux charges nominales avant l'étape consistant à placer au moins un élément de consolidation (2, 3).

22. Procédé selon la revendication 21, comprenant en outre une étape consistant à rétablir les charges de mise en tension ultérieure de la tour (1) aux charges nominales après l'étape consistant à placer au moins un élément de consolidation (2, 3).

23. Procédé selon l'une quelconque des revendications 19 à 22, comprenant en outre une étape consistant à colmater au moins une fissure du premier élément en béton (10, 11) avant l'étape consistant à placer au moins un élément de consolidation (2, 3).
